# EUROPÄISCHE PATENTSCHRIFT

(11) **EP 2 084 197 B1**
(45) Veröffentlichungstag und Bekanntmachung des Hinweises auf die Patenterteilung: **21.04.2010**
(21) Anmeldenummer: 07821421.0
(22) Anmeldetag: 17.10.2007
(51) Int. Cl.: C08F 216/14, A61L 15/60

(54) **VERFAHREN ZUR HERSTELLUNG VON SUPERABSORBERN**
METHOD FOR THE PRODUCTION OF SUPERABSORBERS
PROCÉDÉ DE FABRICATION DE SUPERABSORBANTS

(30) Priorität: 19.10.2006 EP 06122580
(43) Veröffentlichungstag der Anmeldung: 05.08.2009
(73) Patentinhaber: BASF SE, 67056 Ludwigshafen (DE)
(72) Erfinder: BRAIG, Volker, 69469 Weinheim-Lützelsachsen (DE); MARCO, Michael de, 69469 Weinheim (DE); STÖSSER, Michael, 67141 Neuhofen (DE); PAKUSCH, Joachim, 67346 Speyer (DE)
(86) Internationale Anmeldenummer: PCT/EP2007/061056
(87) Internationale Veröffentlichungsnummer: WO 2008/046841

(56) Entgegenhaltungen:
- DE-A1- 19 646 484
- JP-A- 62 104 805

## Beschreibung

Die vorliegende Erfindung betrifft ein Verfahren zur Herstellung von Superabsorbern. Insbesondere betrifft die Erfindung ein verbessertes Verfahren zur Herstellung von Superabsorbern in Knetreaktoren. Die Erfindung betrifft ferner die mit dem erfindungsgemäßen Verfahren hergestellten Superabsorber sowie diesen Superabsorber enthaltende Artikel zur Absorption von Flüssigkeit.

Superabsorber sind bekannt. Für derartige Materialien sind auch Bezeichnungen wie "hochquellfähiges Polymer", "Hydrogel" (oft auch für die trockene Form verwendet), "Hydrogel bildendes Polymer", "Wasser absorbierendes Polymer", "absorbierendes gelbildendes Material", "quellfähiges Harz", "wasserabsorbierendes Harz" oder ähnliche gebräuchlich, ebenso wie die Kurzbezeichnung "SAP" für "super absorbent polymer". Es handelt sich dabei um vernetzte hydrophile Polymere, insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate, wobei wasserabsorbierende Polymere auf Basis teilneutralisierter Acrylsäure am weitesten verbreitet sind. Die wesentlichen Eigenschaften von Superabsorbern sind ihre Fähigkeiten, ein Vielfaches ihres Eigengewichts an wässrigen Flüssigkeiten zu absorbieren und die Flüssigkeit auch unter gewissem Druck nicht wieder abzugeben. Der Superabsorber, der in Form eines trockenen Pulvers eingesetzt wird, wandelt sich bei Flüssigkeitsaufnahme in ein Gel, bei der üblichen Wasseraufnahme entsprechend in ein Hydrogel um. Das mit weitem Abstand wichtigste Einsatzgebiet von Superabsorbern ist das Absorbieren von Körperflüssigkeiten. Superabsorber werden beispielsweise in Windeln für Kleinkinder, Inkontinenzprodukten für Erwachsene oder Damenhygieneprodukten verwendet. Andere Anwendungsgebiete sind beispielsweise die als wasserzurückhaltende Mittel im landwirtschaftlichen Gartenbau, als Wasserspeicher zum Schutz vor Feuer, zur Flüssigkeitsabsorption in Lebensmittelverpackungen oder ganz allgemein zur Absorption von Feuchtigkeit.

Wichtig für einen Superabsorber ist nicht nur seine Absorptionskapazität, sondern auch die Fähigkeit, Flüssigkeit unter Druck zurückzuhalten (Retention) sowie der Flüssigkeitstransport im gequollenen Zustand. Gequollenes Gel kann den Flüssigkeitstransport zu noch nicht gequollenem Superabsorber behindern bis verhindern ("gel blocking"). Gute Transporteigenschaften für Flüssigkeiten besitzen beispielsweise Hydrogele, die im gequollenen Zustand eine hohe Gelfestigkeit aufweisen. Gele mit nur geringer Gelfestigkeit sind unter einem angewendetem Druck (Körperdruck) deformierbar, verstopfen Poren in dem Superabsorber / Cellulosefaser-Saugkörper und verhindern dadurch eine weitere Flüssigkeitsaufnahme. Eine erhöhte Gelfestigkeit wird in aller Regel durch einen höheren Vernetzungsgrad erreicht, wodurch allerdings die Retention des Produktes verringert wird. Eine elegante Methode zur weiteren Erhöhung der Gelfestigkeit stellt die Oberflächennachvernetzung dar. Bei diesem Verfahren werden getrocknete Superabsorber mit durchschnittlicher Vernetzungsdichte einer zusätzlichen Vernetzung unterworfen. Durch die Oberflächennachvernetzung steigt die Vernetzungsdichte in der Schale der Superabsorberpartikel, wodurch die Absorption unter Druckbelastung auf ein höheres Niveau gehoben wird. Während die Absorptionskapazität in der Oberflächenschicht der Superabsorberpartikel sinkt, weist ihr Kern durch das Vorhandensein beweglicher Polymerketten eine im Vergleich zur Schale verbesserte Absorptionskapazität auf, so dass durch den Schalenaufbau eine verbesserte Flüssigkeitsweiterleitung gewährleistet wird, ohne dass gel blocking auftritt. Es ist durchaus wünschenswert, dass die Gesamtkapazität des Superabsorbers nicht spontan, sondern zeitversetzt ausgeschöpft wird. Da der Hygieneartikel in der Regel mehrmals mit Urin beaufschlagt wird, muss das Absorptionsvermögen des Superabsorbers sinnvollerweise nicht nach der ersten Disposition erschöpft sein.

Die hier in Rede stehenden Superabsorber sind übliche Superabsorber, die ein mehrfaches ihres Eigengewichts an Wasser absorbieren und unter gewissem Druck zurückhalten können. Im Allgemeinen weist ein derartiger Superabsorber eine CRC ("Centrifuge Retention Capacity", Meßmethode siehe unten) von mindestens 5 g/g, vorzugsweise mindestens 10 g/g und in besonders bevorzugter Form mindestens 15 g/g auf. Ein "Superabsorber" kann auch ein Gemisch stofflich verschiedener einzelner Superabsorber oder von Komponenten, die erst im Zusammenwirken superabsorbierende Eigenschaften zeigen sein, es kommt hier weniger auf die stoffliche Zusammensetzung an als auf die superabsorbierenden Eigenschaften.

Auch Verfahren zur Herstellung von Superabsorbern sind bekannt. Superabsorber auf Basis von Acrylsäure, die auf dem Markt am gängigsten sind, werden durch radikalische Polymerisation von Acrylsäure in Gegenwart eines Vernetzers (dem "Innenvernetzer") hergestellt, wobei die Acrylsäure vor, nach oder teils vor, teils nach der Polymerisation zu einem gewissen Grad neutralisiert wird, üblicherweise durch Zugabe von Alkali, meist einer wässrigen Natriumhydroxidlösung. Das so gewonnene Polymergel wird zerkleinert (je nach verwendetem Polymerisationsreaktor kann dies gleichzeitig mit der Polymerisation erfolgen) und getrocknet. Das so gewonnene trockene Pulver (das "Grundpolymer" oder "Basispolymer") wird üblicherweise an der Oberfläche der Partikel nachvernetzt, indem es mit weiteren Vernetzern wie etwa organischen Vernetzern oder mehrwertigen Kationen, beispielsweise Aluminium (meist als Aluminiumsulfat eingesetzt) umgesetzt wird, um eine gegenüber dem Partikelinneren stärker vernetzte Oberflächenschicht zu erzeugen.

Frederic L. Buchholz und Andrew T. Graham (Hrsg.) geben in: "Modern Superabsorbent Polymer Technology", J. Wiley & Sons, New York, U.S.A. / Wiley-VCH, Weinheim, Germany, 1997, ISBN 0-471-19411-5, einen zusammenfassenden Überblick über bekannte Verfahren zur Herstellung von Superabsorbern.

WO 2005005 513 A1 offenbart (Meth)acrylsäureester alkoxilierter ungesättigter Polyolether und ihre Herstellung. Diese Ester haben die allgemeine Formel I 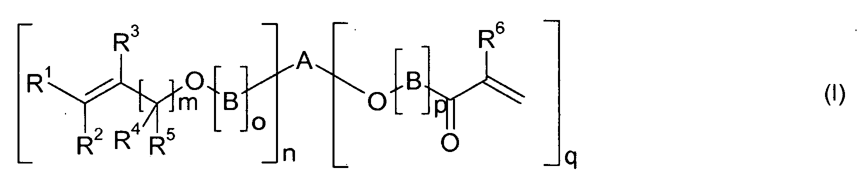 in der
- R¹, R², R³, R⁴ und R⁵: unabhängig voneinander Wasserstoff oder C₁- bis C₆-Alkyl, wobei C₃- bis C₆-Alkyl verzweigt oder unverzweigt sein können,
- R⁶: Wasserstoff oder Methyl,
- m: eine ganze Zahl von 0 bis 10,
- n: eine ganze Zahl von 1 bis 5,
- o: eine ganze Zahl von 0 bis 100,
- p: eine ganze Zahl von 2 bis 100,
- q: eine ganze Zahl von 1 bis 5 und
- A: C₃- bis C₂₀-Alk(n+q)yl oder C₃- bis C₂₀-Heteroalk(n+q)yl
bedeuten,
die Summe von n und q eine ganze Zahl von 3 bis 10 ist und
B für gleiche oder verschiedene Reste, ausgewählt aus der Gruppe von Resten mit den folgenden Strukturformeln: 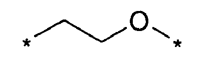 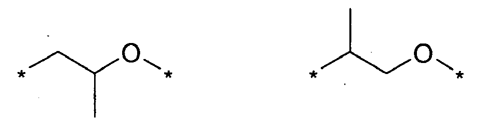 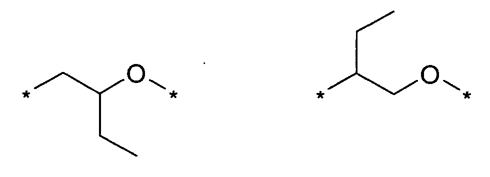 steht, wobei mit * die Verknüpfungspositionen gekennzeichnet sind.

Diese Ester können durch Veresterung alkoxilierter ungesättigter Polyoletheralkohole der allgemeinen Formel II 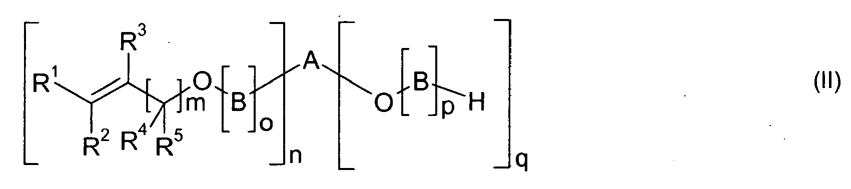 in der R¹, R², R³, R⁴, R⁵, m, n, o, p, q, A und B die obengenannten Bedeutungen haben, mit (Meth)acrylsäure hergestellt werden.

WO 90/15 830 A1 offenbart einen Superabsorber, der mit einem Vernetzergemisch gewonnen wird, dessen eine Komponente eine Bis- oder Trisacryloyl-haltige Verbindung wie etwa Polyethylenglykoldiacrylat mit einer bis 9 Ethylenglykoleinheiten pro Molekül ist. Die andere wird unter Bisallylethern, -amiden, -aminen und Triallylamin ausgewählt und ist beispielsweise ein Diallylether eines Polyols wie etwa Polyethylengklykol mit einer bis drei Ethylenglykoleinheiten im Molekül. WO 02/32 964 A2 empfiehlt die Verwendung eines Vernetzergemisches, dessen eine Komponente in bevorzugter Form ein Allylether eines mehrwertigen Alkohols wie etwa der Diallylether eines Polyethylenglykols mit einem Molekulargewicht von 200 bis 2000 ist, also mit etwa 4 bis 44 Glykoleinheiten im Molekül.

Auch DE 195 43 368 A1, DE 196 45 240 A1, DE 199 39 662 A1, , DE 199 41 423 A1, WO 01/00 258 A1, WO 01/00 259 A1, WO 02/20 068 A1 und WO 02/34 384 A2 beschreiben die Verwendung von (Meth)acrylestern von alkoxiliertem Allylalkohol als Vernetzer für Superabsorber.

EP 238 050 A2 offenbart als mögliche Innenvernetzer für Superabsorber Trimethylolpropantriacrylat, mindestens zweifach mit Acrylsäure oder Methacrylsäure verestertes Glycerin, zweifach bzw. dreifach mit Acrylsäure oder Methacrylsäure veresterte Anlagerungsprodukte von Ethylenoxid und/oder Propylenoxid an Trimethylolpropan. Letztere Vernetzer werden auch in WO 93/21 237 A1 beschrieben. Diese und ähnliche Vernetzer werden auch nach den Lehren von WO 98/47 951 A1, WO 01/41 818 A1 und WO 01/56 625 A2 verwendet.

Nach allen genannten Schriften aus dem Stand der Technik können die (Meth)acrylester jeweils durch Veresterung der entsprechenden Alkohole gewonnen werden, auch letztere werden dort jeweils offenbart oder sind allgemein bekannt.

DE 196 46 484 A1 beschreibt unter anderem den Monoallylether des Ethylenglykols oder Polyethylenglykols mit bis zu 45 Ethylenglykoleinheiten im Molekül sowie dessen (Meth)acrylester, die als Bestandteile eines Vernetzergemisches zur Superabsorberherstellung verwendet werden. Auch die japanische Patentanmeldungs-Offenlegungsschrift JP 62/104 805 beschreibt Monoallylether des Polyethylenglykols oder eines gemischten Polyethylen-/propylenglykols, diese werden dort als Comonomer bei der Superabsorberherstellung verwendet. Als Vernetzer dienen dabei Haloepoxialkane, Polyepoxide oder Aldehyde.

Die japanischen Patentanmeldungs-Offenlegungsschriften JP 2000/001 541 und JP 11/228 685 offenbaren die Herstellung eines Glycerin-monoallylethers, in dem die anderen beiden Hydroxigruppen des Glycerins mit Ethylenglykol- oder Ethylenglykol/Propylenglykol-Einheiten polyalkoxiliert sind. WO 99/10 407 A1 beschreibt die Herstellung derartiger Polyetherpolyole mit ungesättigten Gruppen mittels Doppelmetallcyanidkatalysatoren.

US 5 073 612 lehrt ein Verfahren zur Herstellung von Superabsorbern, bei dem ein alpha-beta-ungesättigtes Comonomer eingesetzt wird, das daneben auch Hydroxigruppen enthält. Im Verfahren von WO 01/45 758 A1 wird dagegen ein Vernetzergemisch verwendet, dessen eine Komponente noch eine freie Hydroxigruppe enthält. Ähnlich wird nach der Lehre von EP 629 411 A1 ein Vernetzergemisch verwendet, in dem freie Hydroxigruppen vorliegen.

WO 2006/034806 A1, WO 2006/034 853 A1, WO 01/38402 A1 sowie die ältere internationale Patentanmeldung mit dem Aktenzeichen PCT/EP/2006/063 787 lehren Verfahren zur kontinuierlichen Herstellung von Superabsorbern in Knetern.

Es weiterhin die Aufgabe, neue oder verbesserte Verfahren zur Herstellung von Superabsorbern zu finden. Wünschenswert sind vor allem Verfahren, die die Bildung von Nebenprodukten oder Ausschuss vermeiden sowie die Notwendigkeit von Rückführungen oder sonstigem Aufwand zur Aufarbeitung von nicht direkt marktfähigem Produkt verringern oder vermeiden. Wünschenswert ist insbesondere ein Verfahren, bei dem die vor allem bei Ausführungsformen mit gleichzeitiger Polymerisation und Zerkleinerung (etwa in Knetreaktoren) beobachtete Bildung unzerkleinerter Produktklumpen ("Knollen") verringert oder vermieden wird, so dass deren Abtrennung und Rückführung oder anderweitige Behandlung (beispielsweise eine separate Zerkleinerung) vermieden wird. Diese Rückführung oder anderweitige Behandlung ist aufgrund der Stoffeigenschaften derartiger Knollen lästig. Diese sind gequollenes klebriges Polymergel und damit nur mit Aufwand zu fördern oder zu zerkleinern.

Dem gemäß wurde ein Verfahren zu Herstellung von Superabsorbern gefunden, das dadurch gekennzeichnet ist, dass man die Polymerisation in Gegenwart mindestens eines ungesättigten Polyetherols durchführt, das aus der von den Polyetherolen mit den folgenden Strukturformeln (1), (2), (3), und (4) gebildeten Gruppe ausgewählt ist: 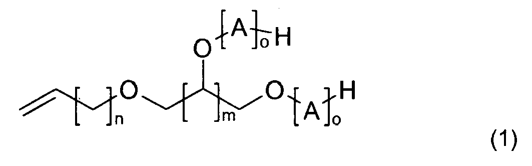 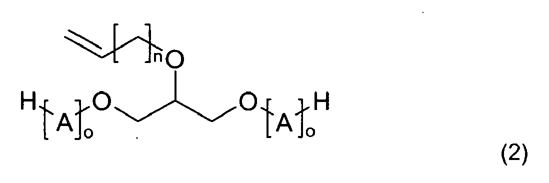 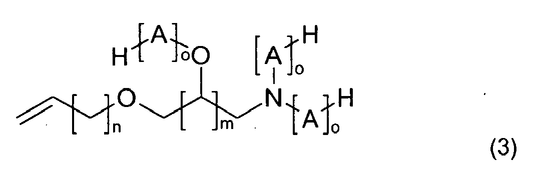 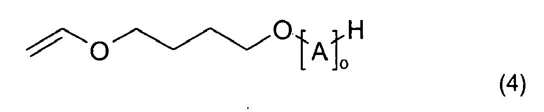 wobei n für 0 oder 1 steht;
m für 1, 2, 3, 4, 5 oder 6;
o für eine natürliche Zahl von 1 bis 200 und
A für die Reste -(H₂C-CHR¹-O)- oder -(R¹HC-CH₂-O)-, wobei R¹ unabhängig voneinander für Wasserstoff oder einen organischen Rest steht.

Es wurde gefunden, dass beim erfindungsgemäßen Verfahren, insbesondere bei seiner Durchführung in einem Reaktor mit gleichzeitiger Polymerisation und Zerkleinerung weniger Knollen auftreten als bei bekannten Verfahren. Eine Abtrennung und Rückführung oder anderweitige Behandlung von Knollen wird vermieden oder zumindest erheblich verringert. Das erfindungsgemäße Verfahren ist damit wirtschaftlicher als vorbekannte Verfahren. Ferner wurden die mit den erfindungsgemäßen Verfahren erhältlichen Superabsorber gefunden sowie Hygieneartikel, die diesen Superabsorber enthalten.

Die zuzusetzenden Verbindungen sind Polyetherole, d.h. Verbindungen mit Ether- und Alkoholgruppen. Sie sind ungesättigt, d.h. sie enthalten eine ethylenisch ungesättigte Gruppe, also eine C=C-Doppelbindung.

In den obigen Formeln steht n für 0 oder 1. Im ersteren Fall handelt es sich um Vinylether, im zweiten um Allylether.

In bevorzugter Form werden ungesättigte Polyetherole der oben angeführten Formeln eingesetzt, bei denen m für die Zahl 1 steht.

In bevorzugter Form werden ungesättigte Polyetherole der oben angeführten Formeln zugesetzt, bei denen o für eine natürliche Zahl von 1 bis 100 steht, in besonders bevorzugter Weise solche, bei denen o für eine natürliche Zahl von 1 bis 50 steht. In ganz besonders bevorzugter Weise werden solche Polyetherole verwendet, bei denen o für eine natürliche Zahl von 10 bis 30 steht. Die Zahl o ist die Anzahl von Alkylenoxideinheiten in der Polyetherolkette. Bei der Alkoxilierung von Alkoholen mit Alkylenoxiden entstehen stets Gemische mit unterschiedlich langen Ketten aus Alkylenoxideinheiten. Die Zahl o ist daher nicht notwendigerweise für zwei Moleküle einer Verbindung der obigen Formeln identisch. Sofern die betreffende Verbindung mehrere Ketten aus Alkylenoxideinheiten aufweist, ist die Zahl o auch für eine der Ketten innerhalb eines einzelnen Moleküls nicht notwendigerweise identisch mit der für eine anderen Kette des selben Moleküls. Die Zahl o steht daher für das statistische Mittel der Anzahl von Alkylenoxideinheiten einer Kette von Alkylenoxideinheiten in der betreffenden Verbindung, d.h. den mittleren Alkoxilierungsgrad.

In obigen Formeln steht A für eine Alkylenoxideinheit in einer Polyetherkette, wie sie beim Umsetzen von Alkoholen oder Aminen mit Alkylenoxiden (Oxiranen) entsteht. Der Substituent R¹ steht für einen Substituenten am Oxiranring des zur Alkoxilierung verwendeten Alkylenoxids, typischerweise ein organischer Rest. In bevorzugter Form werden ungesättigte Polyetherole der oben angeführten Formeln eingesetzt, bei denen A für die Reste -(H₂C-CHR¹-O)- oder -(R¹HC-CH₂-O)- steht, wobei R¹ für Wasserstoff, einen linearen Alkylrest oder einen Phenylrest steht. In besonders bevorzugter Weise steht R¹ für Wasserstoff, einen Methyl- oder einen Ethylrest. Die Reste R¹ können in einer erfindungsgemäße einzusetzenden Verbindung auch verschieden sein, auch innerhalb eines Moleküls. Das heißt, es können auch Polyetherole, die mit unterschiedlichen Alkylenoxiden alkoxiliert sind, verwendet werden. Sofern dies der Fall ist, können die Alkylenoxideinheiten blockweise oder statistisch in der Kette verteilt sein.

Die erfindungsgemäß zuzusetzenden ungesättigten Polyetherole sind bekannt, ebenso wie Verfahren zu ihrer Herstellung. Derartige Verbindungen sind auch gängige Handelswaren. Meist wird zu ihrer Herstellung zunächst ein Vinyl- oder Allylether eines Polyols erzeugt, der mit Alkylenoxid alkoxiliert wird. Im Falle von Verbindungen der Formel (3) wird entsprechend ein Vinyl- oder Allylether eines Aminoalkohols oder aminierten Polyols verwendet. Der Einfachheit halber werden im Folgenden derartige Aminoalkohole oder aminierte Polyole unter "Polyol" subsumiert.

Derartige Vinylether werden beispielsweise durch Umsetzung eines entsprechenden Polyols mit Acetylen erhalten. Eine besonders bequeme Synthese des Grundkörpers von Verbindungen der Formel (4) ist beispielsweise die einfache Vinylierung von Butandiol mit Acetylen.

Allylether von Polyolen können durch Veretherung von Allylalkohol (2-Propen-1-ol) mit dem entsprechenden Polyol in entsprechender Stöchiometrie erhalten werden, durch Umsetzung von Allylchlorid mit dem entsprechenden Polyol oder durch Umsetzung von Allylalkohol mit einem entsprechenden Polyolchlorid. Eine besonders bequeme Synthese von Grundkörpern der Verbindungen der Formeln (1), (2) und (3) mit n=1 und m=1 ist beispielsweise die Umsetzung von Allylalkohol mit Epichlorhydrin (1-Chlor-2-epoxipropan) zu 1-Allyloxi-2-epoxipropan und anschließende Hydrolyse oder Aminolyse des Oxiranrings.

Beispiele ungesättigter Polyol-Allylether, die zu erfindungsgemäß einzusetzenden Polyolethern alkoxiliert werden können, sind Glycerin-1-monoallylether, Glycerin-2-monoallylether, Glycerin-1-monovinylether, Glycerin-2-monovinylether. Ein bevorzugtes Beispiel ist Glycerin-1-monoallylether.

Die so erzeugten Vinyl- oder Allylether werden anschließend durch Umsetzung mit Alkylenoxid alkoxiliert. Geeignete Alkylenoxide sind beispielsweise Ethylenoxid (Oxiran), Propylenoxid (1,2-Epoxipropen, Methyloxiran) und/oder Butylenoxid (1,2-Epoxibuten, Ethyloxiran) oder Styroloxid (2-Phenyl-1,2-Epoxiethen, Phenyloxiran). Bevorzugterweise wird Ethylenoxid oder Propylenoxid verwendet. Auch diese Verfahren sind bekannt. Mögliche Durchführungsformen finden sich unter anderem in Houben-Weyl, Methoden der Organischen Chemie, 4. Auflage, 1963, Thieme Verlag Stuttgart, Band 14/2, Seiten 440 bis 444.

An die Viskosität der erfindungsgemäß einzusetzende alkoxilierten ungesättigten Polyetherole werden keine besonderen Ansprüche gestellt, außer dass sie bei einer Temperatur bis zu ca. 80°C problemlos pumpbar sein sollten. Bevorzugt sollten sie eine Viskosität unter 2000 mPas aufweisen, besonders bevorzugt unter 1000 mPas, und ganz besonders bevorzugt unter 500 mPas.

Verfahren zur Herstellung von Superabsorbern, auch oberflächennachvernetzten Superabsorbern, sind bekannt. Synthetische Superabsorber werden beispielsweise durch Polymerisation einer Monomerlösung, enthaltend
a) mindestens ein ethylenisch ungesättigtes, säuregruppentragendes Monomer,
b) mindestens einen Vernetzer,
c) wahlweise ein oder mehrere mit dem Monomeren a) copolymerisierbare ethylenisch und/oder allylisch ungesättigte Monomere und
d) wahlweise ein oder mehrere wasserlösliche Polymere, auf die die Monomere a), b) und gegebenenfalls c) zumindest teilweise aufgepfropft werden können,
erhalten. Erfindungsgemäß wird zu dieser Monomerlösung wie oben beschrieben
e) mindestens ein ungesättigtes Polyetherol gegeben, das aus der von den Polyetherolen mit den folgenden Strukturformeln (1), (2), (3), und (4) gebildeten Gruppe ausgewählt ist: 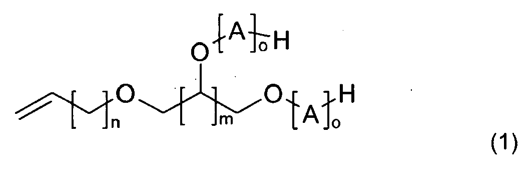 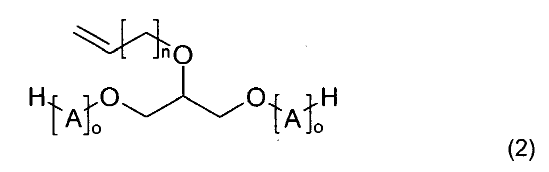 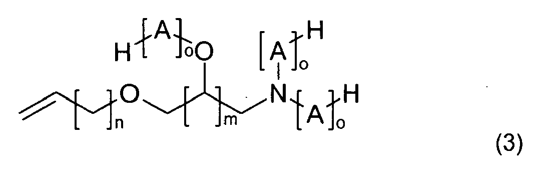 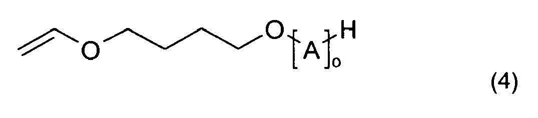
wobei n für 0 oder 1 steht;
m für 1, 2, 3, 4, 5 oder 6;
o für eine natürliche Zahl von 1 bis 200 und
A für die Reste -(H₂C-CHR¹-O)- oder -(R¹HC-CH₂-O)-, wobei R¹ unabhängig voneinander für Wasserstoff oder einen organischen Rest steht.

Das Polyetherol oder Polyetherolgemisch wird vor oder während der Polymerisation oder teilweise vor oder nach der Polymerisation zudosiert. Es ist ebenso möglich, ein Polyetherol oder Polyetherolgemisch vor und ein anderes Polyetherol oder Polyetherolgemisch während der Polymerisation zuzudosieren. Besonders bequem und daher bevorzugt ist die Zugabe zur Monomerlösung vor der Polymerisation.

Zugesetzt wird eine Gesamtmenge an Polyetherol e) von im Allgemeinen mindestens 0,001 Gew.-%, vorzugsweise mindestens 0,01 Gew.-% und in besonders bevorzugter Form mindestens 0,03 Gew.-% sowie im Allgemeinen höchstens 1 Gew.-%, vorzugsweise höchstens 0,5 Gew.-% und in besonders bevorzugter Form höchstens 0,03 Gew.-%, jeweils bezogen auf das Monomer a) in der Monomerlösung.

Geeignete Monomere a) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. (Als Oberbegriff für Methacrylsäure und Acrylsäure wird oft der Begriff "(Meth)acrylsäure" verwendet). Ganz besonders bevorzugt ist Acrylsäure.

Die Monomere a), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel (III) verstanden 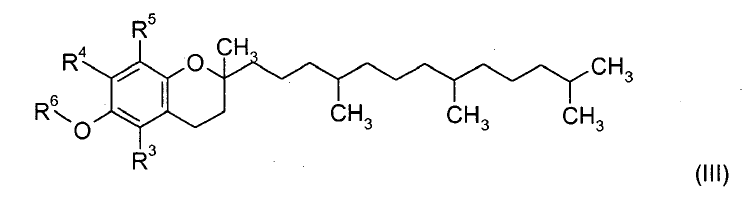 wobei R³ Wasserstoff oder Methyl, R⁴ Wasserstoff oder Methyl, R⁵ Wasserstoff oder Methyl und R⁴ Wasserstoff oder einen Säurerest mit 1 bis 20 Kohlenstoffatomen bedeutet.

Bevorzugte Reste für R⁶ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R³ = R⁴ = R⁵ = Methyl, insbesondere racemisches alpha-Tocopherol. R⁶ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Vernetzer b) sind Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Allylmethacrylat, Trimethylolpropantriacrylat, Triallylamin, Tetraallyloxyethan, wie in EP 530 438 A1 beschrieben, Di- und Triacrylate, wie in EP 547 847 A1, EP 559 476 A1, EP 632 068 A1, WO 93/21 237 A1, WO 03/104 299 A1, WO 03/104 300 A1, WO 03/104 301 A1 und DE 103 31 450 A1 beschrieben, gemischte Acrylate, die neben Acrylatgruppen weitere ethylenisch ungesättigte Gruppen enthalten, wie in DE 103 31 456 A1 und WO 04/013 064 A2 beschrieben, oder Vernetzermischungen, wie beispielsweise in DE 195 43 368 A1, DE 196 46 484 A1, WO 90/15 830 A1 und WO 02/032 962 A2 beschrieben.

Geeignete Vernetzer b) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP 343 427 A2 beschrieben sind. Weiterhin geeignete Vernetzer b) sind Pentaerythritoldi-, Pentaerythritoltri- und Pentaerythritoltetraallylether, Polyethylenglykoldiallylether, Ethylenglykoldiallylether, Glycerindi- und Glycerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer b) sind jedoch Di- und Triacrylate des 3- bis 15-fach ethoxylierten Glycerins, des 3- bis 15-fach ethoxylierten Trimethylolpropans, des 3- bis 15-fach ethoxylierten Trimethylolethans, insbesondere Di- und Triacrylate des 2- bis 6- fach ethoxylierten Glycerins oder Trimethylolpropans, des 3-fach propoxylierten Glycerins oder Trimethylolpropans, sowie des 3-fach gemischt ethoxylierten oder propoxylierten Glycerins oder Trimethylolpropans, des 15-fach ethoxylierten Glycerins oder Trimethylolpropans, sowie des 40-fach ethoxylierten Glycerins, Trimethylolethans oder Trimethylolpropans.

Ganz besonders bevorzugte Vernetzer b) sind die mit Acrylsäure oder Methacrylsäure zu Di- oder Triacrylaten veresterten mehrfach ethoxylierten und/oder propoxylierten Glycerine wie sie beispielsweise in WO 03/104 301 A1 beschrieben sind. Besonders vorteilhaft sind Di- und/oder Triacrylate des 3- bis 10-fach ethoxylierten Glycerins. Ganz besonders bevorzugt sind Di- oder Triacrylate des 1- bis 5- fach ethoxylierten und/oder propoxylierten Glycerins. Am meisten bevorzugt sind die Triacrylate des 3- bis 5-fach ethoxylierten und/oder propoxylierten Glycerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Mit den Monomeren a) copolymerisierbare ethylenisch ungesättigte Monomere c) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere d) können Polyvinylalkohol, Polyvinylpyrrolidon, Stärke, Stärkederivate, Polyglykole, formal ganz oder teilweise aus Vinylaminmonomeren aufgebaute Polymere wie teilweise oder vollständig hydrolysiertes Polyvinylamid (sogenanntes "Polyvinylamin") oder Polyacrylsäuren, vorzugsweise Polyvinylalkohol und Stärke, eingesetzt werden.

Die Polymerisation wird wahlweise in Gegenwart üblicher Polymerisationsregler durchgeführt. Geeignete Polymerisationsregler sind beispielsweise Thioverbindungen, wie Thioglykolsäure, Mercaptoalkohole, z. B. 2-Mercaptoethanol, Mercaptopropanol und Mercaptobutanol, Dodecylmercaptan, Ameisensäure, Ammoniak und Amine, z. B. Ethanolamin, Diethanolamin, Triethanolamin, Triethylamin, Morpholin und Piperidin.

Die Monomere (a), (b) und gegebenenfalls (c) werden, wahlweise in Gegenwart der wasserlöslichen Polymere d) sowie in Gegenwart der Polyetherole e) in 20 bis 80, vorzugsweise 20 bis 50, insbesondere 30 bis 45 Gew.-%iger wässriger Lösung in Gegenwart von Polymerisationsinitiatoren miteinander (co)polymerisiert. Als Polymerisationsinitiatoren können sämtliche unter den Polymerisationsbedingungen in Radikale zerfallende Verbindungen eingesetzt werden, z. B. Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Polymerisationsinitiatoren zu verwenden, z. B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylperneodekanoat. Weitere geeignete Polymerisationsinitiatoren sind Azostarter, z. B. 2,2'-Azobis-(2-amidinopropan)dihydrochlorid, 2,2'-Azobis-(N,N-dimethylen)isobutyramidin-dihydrochlorid, 2-(Carbamoylazo)isobutyronitril und 4,4'-Azobis-(4-cyanovaleriansäure). Die genannten Polymerisationsinitiatoren werden in üblichen Mengen eingesetzt, z. B. in Mengen von 0,01 bis 5, vorzugsweise 0,1 bis 2 Mol-%, bezogen auf die zu polymerisierenden Monomere.

Die Redoxinitiatoren enthalten als oxidierende Komponente mindestens eine der oben angegebenen Perverbindungen und eine reduzierende Komponente, beispielsweise Ascorbinsäure, Glukose, Sorbose, Ammonium- oder Alkalimetallhydrogensulfit, -sulfit, - thiosulfat, -hyposulfit, -pyrosulfit oder -sulfid (insbesondere die Natriumverbindungen), Metallsalze, wie Eisen-II-ionen oder Silberionen, Natriumhydroxymethylsulfoxylat, oder ein Gemisch aus den Dinatriumsalzen der 2-Hydroxi-2-sulfinatoessigsäure und der 2-Hydroxi-2-sulfonatoessigsäure, oder auch Gemische der genannten reduzierenden Komponenten. Vorzugsweise verwendet man als reduzierende Komponente des Redoxinitiators Ascorbinsäure oder Natriumpyrosulfit. Bezogen auf die bei der Polymerisation eingesetzte Menge an Monomeren verwendet man 1 · 10⁻⁵ bis 1 Mol-% der reduzierenden Komponente des Redoxinitiators und 1 · 10⁻⁵ bis 5 Mol-% der oxidierenden Komponente. Anstelle der oxidierenden Komponente oder zusätzlich kann man auch einen oder mehrere wasserlösliche Azostarter verwenden.

Bevorzugt wird ein Redoxinitiator bestehend aus Wasserstoffperoxid, Natriumperoxodisulfat und Ascorbinsäure eingesetzt. Beispielsweise werden diese Komponenten in den Konzentrationen 1 · 10⁻² Mol-% Wasserstoffperoxid, 0,084 Mol-% Natriumperoxodisulfat und 2,5 · 10⁻³ Mol-% Ascorbinsäure bezogen auf die Monomere eingesetzt.

Es ist ebenso möglich, die Polymerisation auf anderem Wege zu starten, hierfür sind zahlreiche Mehoden bekannt. Ein Beispiel ist die Initiierung der Polymerisation durch Bestrahlung mit ultraviolettemLicht, meist in Gegenwart von Verbindungen, die bei Bestrahlung mit ultraviolettem Licht Radikale bilden. Beispiele für solche Verbindungen sind 2-Hydroxi-2-methyl-1-phenyl-1-propanon und/oder alpha,-alpha-Dimethoxi-alpha-phenylacetophenon.

Die wässrige Monomerlösung kann den Initiator gelöst oder dispergiert enthalten. Die Initiatoren können dem Polymerisationsreaktor jedoch auch getrennt von der Monomerlösung zugeführt werden.

Die bevorzugten Polymerisationsinhibitoren benötigen für eine optimale Wirkung gelösten Sauerstoff. Daher können die Polymerisationsinhibitoren vor der Polymerisation durch Inertisierung, d.h. Durchströmen mit einem inerten Gas, vorzugsweise Stickstoff, von gelöstem Sauerstoff befreit werden. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt. Die Monomerlösung wird wahlweise mit einem Inertgasstrom durch den Reaktor geführt.

Superabsorber werden üblicherweise durch Polymerisation einer wässrigen Monomerlösung und wahlweise einer anschließenden Zerkleinerung des Hydrogels erhalten. Geeignete Herstellverfahren sind in der Literatur beschrieben. Superabsorber werden beispielsweise erhalten durch:
- Gelpolymerisation im Batchverfahren bzw. Rohrreaktor und anschließender Zerkleinerung im Fleischwolf, Extruder oder Kneter, wie beispielsweise in EP 445 619 A2 und DE 19 846 413 A1 beschrieben;
- Polymerisation im Kneter, wobei durch beispielsweise gegenläufige Rührwellen kontinuierlich zerkleinert wird, wie beispielsweise in WO 01/38 402 A1 beschrieben;
- Polymerisation auf dem Band und anschließende Zerkleinerung im Fleischwolf, Extruder oder Kneter wie beispielsweise in EP 955 086 A2, DE 38 25 366 A1 oder US 6 241 928 beschrieben;
- Emulsionspolymerisation, wobei bereits Perlpolymerisate relativ enger Gelgrößenverteilung anfallen, wie beispielsweise in EP 457 660 A1 beschrieben;
- In-situ Polymerisation einer Gewebeschicht, die zumeist im kontinuierlichen Betrieb zuvor mit wässriger Monomerlösung besprüht und anschließend einer Photopolymerisation unterworfen wurde, wie beispielsweise in WO 02/94 328 A2, WO 02/94 329 A1) beschrieben.

Bezüglich Details der Verfahrensdurchführung wird hiermit ausdrücklich auf die genannten Schriften verwiesen. Die Umsetzung wird vorzugsweise in einem Kneter oder auf einem Bandreaktor durchgeführt.

In besonders bevorzugter Form wird das erfindungsgemäße Verfahren als nichtstatische oder "gerührte" Polymerisation durchgeführt, d.h. mit Eintrag mechanischer Energie in die polymerisierende Masse, insbesondere von Scherenergie. Besonders bevorzugt ist demnach die Durchführung des erfindungsgemäßen Verfahrens unter gleichzeitiger Polymerisation und Zerkleinerung des Polymerisats. Ganz besonders bevorzugt ist die Durchführung in einem Kneter. Dort wird beispielsweise durch ein, zwei oder auch mehr Rührwellen, vorzugsweise ein oder zwei, in besonders bevorzugter Form zwei (meist als "Rühr- und Putzwelle" oder als zwei Sigma-Wellen angeordnet), die gleich- oder gegenläufig arbeiten, das als Monomerlösung eingetragene und im Kneter polymerisierende Gut kontinuierlich zerkleinert. Derartige Verfahren und dazu geeignete Apparate sind beispielsweise in WO 01/38 402 A1, WO 2006/034 806 A1 oder WO 2006/34 853 A1 beschrieben, auf die hiermit ausdrücklich Bezug genommen wird.

Der aus wirtschaftlichen Gründen bevorzugte und daher derzeit übliche Herstellungsprozess für Superabsorber ist die kontinuierliche Gelpolymerisation. Dabei wird zunächst eine Monomermischung hergestellt, indem zur Acrylsäurelösung in zeitlich und/oder räumlich getrennter Zugabefolge das Neutralisationsmittel, optionale Comonomere und/oder weitere Hilfsstoffe wie etwa die erfindungsgemäß einzusetzenden Polyetherole zugegeben werden, und die Mischung dann in den Reaktor überführt wird, oder bereits im Reaktor vorgelegt wird. Als letzte Zugabe erfolgt die Eindosierung des Initiatorsystems zum Start der Polymerisation. Im sich anschließenden kontinuierlichen Polymerisationsverfahren erfolgt die Reaktion zum Polymergel (d.h. dem im Lösungsmittel der Polymerisation - üblicherweise Wasser - zum Gel gequollenen Polymer), das im Falle einer gerührten Polymerisation bereits im Vorfeld zerkleinert wird. Das Polymergel wird anschließend getrocknet, falls erforderlich, auch gebrochen, gemahlen und gesiebt und zur weiteren Oberflächenbehandlung transferiert.

Die Säuregruppen der Superabsorber werden üblicherweise teilweise neutralisiert, im Allgemeinen zu mindestens 10 Mol-%, vorzugsweise zu mindestens 25 Mol-% und in besonders bevorzugter Form mindestens 30 Mol-% sowie im Allgemeinen höchstens 95 Mol-%, vorzugsweise höchstens 80 Mol-% und in besonders bevorzugter Form höchstens 50 Mol-%, wozu die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium als Alkalimetalle besonders bevorzugt sind, ganz besonders bevorzugt jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Neutralisation kann nach der Polymerisation auf der Stufe des Hydrogels (d.h. vor der Trocknung) durchgeführt werden. Es ist aber auch möglich, die Neutralisation auf den gewünschten Neutralisationsgrad vollständig oder teilweise vor der Polymerisation durchzuführen. Bei teilweiser Neutralisation vor der Polymerisation werden im Allgemeinen mindestens 10 Mol-%, vorzugsweise mindestens 15 Mol-% sowie im Allgemeinen höchstens 40 Mol-%, vorzugsweise höchstens 30 Mol-% und in besonders bevorzugter Form höchstens 25 Mol-% der Säuregruppen in den eingesetzten Monomeren vor der Polymerisation neutralisiert, indem ein Teil des Neutralisationsmittels bereits der Monomerlösung zugesetzt wird. Der gewünschte Endneutralisationsgrad wird in diesem Fall erst gegen Ende oder nach der Polymerisation, vorzugsweise auf der Stufe des Hydrogels vor dessen Trocknung eingestellt. Die Monomerlösung wird durch Einmischen des Neutralisationsmittels neutralisiert. Das Hydrogel kann bei der Neutralisation mechanisch zerkleinert werden, beispielsweise mittels eines Fleischwolfes oder vergleichbaren Apparats zum Zerkleinern gelartiger Massen, wobei das Neutralisationsmittel aufgesprüht, übergestreut oder aufgegossen und dann sorgfältig untergemischt wird. Dazu kann die erhaltene Gelmasse noch mehrmals zur Homogenisierung gewolft werden.

In bevorzugter Form wird die Monomerlösung vor Polymerisation durch Zugabe des Neutralisationsmittels auf den gewünschten Endneutralisationsgrad eingestellt.

Die aus der Polymerisation erhaltenen Gele werden wahlweise einige Zeit, beispielsweise mindestens 30 Minuten, vorzugsweise mindestens 60 Minuten und in besonders bevorzugter Weise mindestens 90 Minuten sowie im Allgemeinen höchstens 12 Stunden, vorzugsweise höchstens 8 Stunden und in besonders bevorzugter Form höchstens 6 Stunden bei einer Temperatur von im Allgemeinen mindestens 50 °C und vorzugsweise mindestens 70 °C sowie im Allgemeinen höchstens 130 °C und vorzugsweise höchstens 100 °C gehalten, wodurch sich ihre Eigenschaften oft noch verbessern lassen.

Es ist ebenso möglich, weitere bekannte Maßnahmen zur Nachbehandlung des Gels anzuwenden. So kann beispielsweise Unterkorn aus Siebschritten des weiteren Herstellprozesses (sogenannte "Fines") auf der Stufe des polymerisierten, noch nicht getrockneten Gels eingemischt werden. Es ist ebenso möglich, Maßnahmen zur Absenkung des Restmonomerengehalts im Gel durchzuführen, etwa durch Zusatz weiterer Initiatoren. Wahlweise kann das Gel auch mit Reduktionsmitteln (beispielsweise mit Natriumhydrogensulfit) oder mit Bleichmitteln behandelt werden.

Das neutralisierte Hydrogel wird dann mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture Content" bestimmt wird. Der trockene Superabsorber enthält folglich bis zu 15 Gew.-% Feuchtigkeit, vorzugsweise höchstens 10 Gew.-%. Entscheidend für die Einstufung als "trocken" ist insbesondere für Handhabung als Pulver (etwa zur pneumatischen Förderung, Abfüllung, Siebung oder sonstigen Verfahrensschritten aus der Feststoffverfahrenstechnik) ausreichende Rieselfähigkeit. Wahlweise kann zur Trocknung aber auch ein Wirbelbetttrockner oder ein beheizter Pflugscharmischer verwendet werden. Um besonders farblose Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso farbloser, je höher der Feststoffgehalt des Gels ist. Der Lösungsmittelanteil bei der Polymerisation wird daher so eingestellt, dass der Feststoffgehalt des Gels vor der Trocknung daher im Allgemeinen bei mindestens 20 Gew.-%, vorzugsweise bei mindestens 25 Gew.-% und in besonders bevorzugter Form bei mindestens 30 Gew.-% sowie im Allgemeinen bei höchstens 90 Gew.-%, vorzugsweise bei höchstens 85 Gew.-% und in besonders bevorzugter Form bei höchstens 80 Gew.-% liegt. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Das getrocknete Hydrogel (das kein Gel mehr ist, auch wenn oft noch so genannt), sondern ein trockenes Polymer mit superabsorbierenden Eigenschaften, das unter den Begriff "Superabsorber" fällt) wird vorzugsweise gemahlen und gesiebt, wobei zur Mahlung üblicherweise Walzenstühle, Stiftmühlen, Hammermühlen, Schneidmühlen oder Schwingmühlen eingesetzt werden können. Die Partikelgröße des gesiebten, trockenen Hydrogels beträgt vorzugsweise unter 1000 µm, besonders bevorzugt unter 900 µm, ganz besonders bevorzugt unter 850 µm, und vorzugsweise über 80 µm, besonders bevorzugt über 90 µm, ganz besonders bevorzugt über 100 µm.

Ganz besonders bevorzugt ist eine Partikelgröße (Siebschnitt) von 106 bis 850 µm. Die Partikelgröße wird gemäß der von der EDANA (European Disposables and Nonwovens Association) empfohlenen Testmethode Nr. 420.2-02 "Particle size distribution" bestimmt.

Die so hergestellten trockenen superabsorbierenden Polymere werden üblicherweise als "Grundpolymere" bezeichnet und vorzugsweise anschließend oberflächennachvernetzt. Die Oberflächennachvernetzung kann in an sich bekannter Weise mit getrockneten, gemahlenen und abgesiebten Polymerpartikeln geschehen. Hierzu werden Verbindungen, die mit den funktionellen Gruppen des Grundpolymers unter Vernetzung reagieren können, meist in Form einer Lösung auf die Oberfläche der Grundpolymerpartikel aufgebracht. Geeignete Nachvernetzungsmittel sind beispielsweise:
- Di- oder Polyepoxide, etwa Di- oder Polyglycidylverbindungen wie Phosphonsäurediglycidylester , Ethylenglykoldiglycidylether oder Bischlorhydrinether von Polyalkylenglykolen,
- Alkoxysilylverbindungen,
- Polyaziridine, Aziridin-Einheiten enthaltende Verbindungen auf Basis von Polyethern oder substituierten Kohlenwasserstoffen, beispielsweise Bis-N-Aziridinomethan,
- Polyamine oder Polyamidoamine sowie deren Umsetzungsprodukte mit Epichlorhydrin,
- Polyole wie Ethylenglykol, 1,2-Propandiol, 1,4-Butandiol, Glycerin, Methyltriglykol, Polyethylenglykole mit einem mittleren Molekulargewicht Mw von 200 - 10000, Di- und Polyglycerin, Pentaerythrit, Sorbit, die Oxethylate dieser Polyole sowie deren Ester mit Carbonsäuren oder der Kohlensäure wie Ethylencarbonat oder Propylencarbonat,
- Kohlensäurederivate wie Harnstoff, Thioharnstoff, Guanidin, Dicyandiamid, 2-Oxazolidinon und dessen Derivate, Bisoxazolin, Polyoxazoline, Di- und Polyisocyanate,
- Di- und Poly-N-methylolverbindungen wie beispielsweise Methylenbis(N-methylolmethacrylamid) oder Melamin-Formaldehyd-Harze,
- Verbindungen mit zwei oder mehr blockierten Isocyanat-Gruppen wie beispielsweise Trimethylhexamethylendüsocyanat blockiert mit 2,2,3,6-Tetramethylpiperidinon-4.

Bei Bedarf können saure Katalysatoren wie beispielsweise p-Toluolsulfonsäure, Phosphorsäure, Borsäure oder Ammoniumdihydrogenphosphat zugesetzt werden.

Besonders geeignete Nachvernetzungsmittel sind Di- oder Polyglycidylverbindungen wie Ethylenglykoldiglycidylether, die Umsetzungsprodukte von Polyamidoaminen mit Epichlorhydrin, 2-Oxazolidinon und N-Hydroxyethyl-2-oxazolidinon.

Die Oberflächennachvernetzung (oft auch nur "Nachvernetzung") wird üblicherweise so durchgeführt, dass eine Lösung des Oberflächennachvernetzers (oft auch nur "Nachvernetzer") auf das Hydrogel oder das trockene Grundpolymerpulver aufgesprüht wird.

Als Lösungsmittel für den Oberflächennachvernetzer wird ein übliches geeignetes Lösungsmittel verwendet, beispielsweise Wasser, Alkohole, DMF, DMSO sowie Mischungen davon. Besonders bevorzugt sind Wasser und Wasser/Alkohol-Mischungen wie zum Bespiel Wasser/Methanol, Wasser/Isopropanol, Wasser/1,2-Propandiol und Wasser/1,3-Propandiol.

Das Aufsprühen einer Lösung des Nachvernetzers wird vorzugsweise in Mischern mit bewegten Mischwerkzeugen, wie Schneckenmischern, Paddelmischern, Scheibenmischern, Pflugscharmischern und Schaufelmischern, durchgeführt werden. Besonders bevorzugt sind Vertikalmischer, ganz besonders bevorzugt sind Pflugscharmischer und Schaufelmischer. Geeignete und bekannte Mischer sind beispielsweise Lödige^{®}-, Bepex^{®}-, Nauta^{®}-, Processall^{®}- und Schugi^{®}-Mischer. Ganz besonders bevorzugt werden Hochgeschwindigkeitsmischer, beispielsweise vom Typ Schugi-Flexomix^{®} oder Turbolizer^{®}, eingesetzt.

Nach Aufsprühen der Vernetzer-Lösung kann wahlweise ein Temperaturbehandlungsschritt, im Wesentlichen zur Ausführung der Oberflächennachvernetzungsreaktion (dennoch meist nur als "Trocknung bezeichnet") nachfolgen, bevorzugt in einem nachgeschalteten beheizten Mischer ("Trockner"), bei einer Temperatur von im Allgemeinen mindestens 50 °C, vorzugsweise mindestens 80 °C und in besonders bevorzugter Form mindestens 90 °C sowie im Allgemeinen höchstens 250 °C, vorzugsweise höchstens 200 °C und in besonders bevorzugter Form höchstens 150 °C. Die mittlere Verweilzeit (also die gemittelte Verweilzeit der einzelnen Superabsorberpartikel) des zu behandelnden Superabsorbers im Trockner beträgt im Allgemeinen mindestens 1 Minute, vorzugsweise mindestens 3 Minuten und in besonders bevorzugter Form mindestens 5 Minuten sowie im Allgemeinen höchstens 6 Stunden, vorzugsweise höchstens 2 Stunden und in besonders bevorzugter Weise höchstens 1 Stunde. Dabei werden neben der eigentlichen Trocknung sowohl etwaige vorhandene Spaltprodukte als auch Lösungsmittelanteile entfernt. Die thermische Trocknung wird in üblichen Trocknern wie Hordentrocknern, Drehrohröfen oder beheizbaren Schnecken, vorzugsweise in Kontakttrocknern durchgeführt. Bevorzugt ist die Verwendung von Trocknern, in denen das Produkt bewegt wird, also beheizten Mischern, besonders bevorzugt Schaufeltrocknern, ganz besonders bevorzugt Scheibentrocknern. Geeignete Trockner sind beispielsweise Bepex^{®}-Trockner und Nara^{®}-Trockner. Überdies können auch Wirbelschichttrockner eingesetzt werden. Die Trocknung kann aber auch im Mischer selbst erfolgen, durch Beheizung des Mantels oder Einblasen eines vorgewärmten Gases wie Luft. Es kann aber auch beispielsweise eine azeotrope Destillation als Trocknungsverfahren benutzt werden. Die Vernetzungsreaktion kann sowohl vor als auch während der Trocknung stattfinden.

In einer besonders bevorzugten Ausführung der Erfindung wird zusätzlich die Hydrophilie der Partikeloberfläche der Grundpolymere durch Ausbildung von Komplexen modifiziert. Die Bildung der Komplexe auf der äußeren Schale der Partikel erfolgt durch Aufsprühen von Lösungen zwei- oder mehrwertiger Kationen, wobei die Kationen mit den Säuregruppen des Polymers unter Ausbildung von Komplexen reagieren können. Beispiele für zwei- oder mehrwertige Kationen sind formal ganz oder teilweise aus Vinylaminmonomeren aufgebaute Polymere wie teilweise oder vollständig hydrolysiertes Polyvinylamid (sogenanntes "Polyvinylamin"), dessen Amingruppen stets - auch bei sehr hohen pH-Werten - teilweise zu Ammoniumgruppen protoniert vorliegen oder Metallkationen wie Mg²⁺, Ca²⁺, Al³⁺, Sc³⁺, Ti⁴+, Mn²⁺, Fe^{2+/3+}, Co²⁺, Ni²⁺, Cu²⁺, Zn²⁺, Y³⁺, Zr⁴⁺, La³⁺, Ce⁴⁺, Hf⁴⁺, und Au³⁺. Bevorzugte Metall-Kationen sind Mg²⁺, Ca²⁺, Al³⁺, Ti⁴⁺, Zr⁴⁺ und La³⁺, und besonders bevorzugte Metall-Kationen sind Al³⁺, Ti⁴⁺und Zr⁴⁺. Die Metall-Kationen können sowohl allein als auch im Gemisch untereinander eingesetzt werden. Von den genannten Metall-Kationen sind alle Metallsalze geeignet, die eine ausreichende Löslichkeit in dem zu verwendenden Lösungsmittel besitzen. Besonders geeignet sind Metallsalze mit schwach komplexierenden Anionen wie zum Beispiel Chlorid, Nitrat und Sulfat, Hydrogensulfat, Carbonat, Hydrogencarbonat, Nitrat, Phosphat, Hydrogenphosphat, Dihydrogenphosphat und Carboxylat, wie Acetat und Lactat. In besonders bevorzugter Form wird Aluminiumsulfat verwendet. Als Lösungsmittel für die Metallsalze können Wasser, Alkohole, DMF, DMSO sowie Mischungen dieser Komponenten eingesetzt werden. Besonders bevorzugt sind Wasser und Wasser/Alkohol-Mischungen wie zum Beispiel Wasser/Methanol, Wasser/Isopropanol, Wasser/1,2-Propandiol und Wasser/1,3-Propandiol.

Die Behandlung des Grundpolymeren mit Lösung eines zwei- oder mehrwertigen Kations erfolgt in gleicher Weise wie die mit Oberflächennachvernetzer, einschließlich des wahlweisen Trocknungsschritts. Oberflächennachvernetzer und polyvalentes Kation können in einer gemeinsamen Lösung oder als getrennte Lösungen aufgesprüht werden. Das Aufsprühen der Metallsalz-Lösung auf die Superabsorberpartikel kann sowohl vor als auch nach der Oberflächennachvernetzung erfolgen. In einem besonders bevorzugten Verfahren erfolgt die Aufsprühung der Metallsalz-Lösung im gleichen Schritt mit dem Aufsprühen der Vemetzer-Lösung, wobei beide Lösungen getrennt nacheinander oder gleichzeitig über zwei Düsen aufgesprüht werden, oder Vernetzer- und Metallsalz-Lösung vereint über eine Düse aufgesprüht werden können.

Sofern im Anschluss an die Oberflächennachvernetzung und/oder Behandlung mit Komplexbildner ein Trocknungsschritt durchgeführt wird, ist es vorteilhaft, aber nicht unbedingt notwendig, das Produkt nach der Trocknung zu kühlen. Die Kühlung kann kontinuierlich oder diskontinuierlich erfolgen, bequemerweise wird das Produkt dazu kontinuierlich in einen dem Trockner nachgeschalteten Kühler gefördert. Dazu kann jeder zur Abfuhr von Wärme aus pulverförmigen Feststoffen bekannte Apparat verwendet werden, insbesondere jede oben als Trocknungsapparat erwähnte Vorrichtung, sofern sie nicht mit einem Heizmedium, sondern mit einem Kühlmedium wie etwa mit Kühlwasser beaufschlagt wird, so dass über die Wände und je nach Konstruktion auch über die Rührorgane oder sonstige Wärmeaustauschflächen keine Wärme in den Superabsorber eingetragen, sondern daraus abgeführt wird. Bevorzugt ist die Verwendung von Kühlern, in denen das Produkt bewegt wird, also gekühlten Mischern. beispielsweise Schaufelkühlern, Scheibenkühlern oder Paddelkühler wie etwa in Nara^{®}- oder Bepex^{®}-Kühlern. Der Superabsorber kann auch in der Wirbelschicht durch Einblasen eines gekühlten Gases wie kalter Luft gekühlt werden. Die Bedingungen der Kühlung werden so eingestellt, dass ein Superabsorber mit der für die Weiterverarbeitung gewünschten Temperatur erhalten wird. Typischerweise wird eine mittlere Verweilzeit im Kühler von im Allgemeinen mindestens 1 Minute, vorzugsweise mindestens 3 Minuten und in besonders bevorzugter Form mindestens 5 Minuten sowie im Allgemeinen höchstens 6 Stunden, vorzugsweise höchstens 2 Stunden und in besonders bevorzugter Weise höchstens 1 Stunde eingestellt und die Kühlleistung so bemessen, dass das erhaltene Produkt eine Temperatur von im Allgemeinen mindestens 0 °C, vorzugsweise mindestens 10 °C und in besonders bevorzugter Form mindestens 20 °C sowie im Allgemeinen höchstens 100 °C, vorzugsweise höchstens 80 °C und in besonders bevorzugter Form höchstens 60 °C aufweist.

Optional kann noch eine weitere Modifizierung der Superabsorber durch Zumischung feinteiliger anorganischer Feststoffe, wie zum Beispiel Siliziumdioxid, Aluminiumoxid, Titandioxid und Eisen(II)-oxid erfolgen, wodurch die Effekte der Oberflächennachbehandlung noch weiter verstärkt werden. Besonders bevorzugt ist die Zumischung von hydrophilem Siliziumdioxid oder von Aluminiumoxid mit einer mittleren Größe der Primärteilchen von 4 bis 50 nm und einer spezifischen Oberfläche von 50 - 450 m²/g. Die Zumischung feinteiliger anorganischer Feststoffe erfolgt bevorzugt nach der Oberflächenmodifizierung durch Vernetzung/Komplexbildung, kann aber auch vor oder während diesen Oberflächenmodifizierungen durchgeführt werden.

Wahlweise wird Superabsorber mit weiteren üblichen Zusätzen und Hilfsstoffen versehen, die Lagerungs- oder Handhabungseigenschaften beeinflussen. Beispiele dafür sind Einfärbungen, opake Zusätze, um die Sichtbarkeit gequollenen Gels zu verbessern, was in manchen Anwendungen wünschenswert ist, Zusätze zur Verbesserung des Fließverhaltens des Pulvers, Tenside oder Ähnliches. Oft wird dem Superabsorber Entstaubungs- oder Staubbindemittel zugegeben. Entstaubungs- oder Staubbindemittel sind bekannt, beispielsweise werden Polyetherglykole wie Polyethylenglykol mit einem Molekulargewicht von 400 bis 20 000 g/Mol, Polyole wie Glycerin, Sorbit, Neopentylglykol oder Trimethylolpropan, die wahlweise auch 7 bis 20-fach ethoxyliert sind, verwendet. Auch ein endlicher Wassergehalt des Superabsorbers kann durch Wasserzugabe eingestellt werden, sofern gewünscht.

Die Feststoffe, Zusätze und Hilfsstoffe können jeweils in separaten Verfahrensschritten zugegeben werden, meist ist jedoch die bequemste Methode, sie dem Superabsorber im Kühler zuzugeben, etwa durch Aufsprühen einer Lösung oder Zugabe in feinteiliger fester oder in flüssiger Form.

Der oberflächennachvernetzte Superabsorber wird wahlweise in üblicher Weise gemahlen und/oder gesiebt. Mahlung ist hier typischerweise nicht erforderlich, meist ist aber zur Einstellung der gewünschten Partikelgrößenverteilung des Produkts das Absieben von gebildeten Agglomeraten oder Feinkorn angebracht. Agglomerate und Feinkorn werden entweder verworfen oder vorzugsweise in bekannter Weise und an geeigneter Stelle in das Verfahren zurückgeführt; Agglomerate nach Zerkleinerung. Die Partikelgröße der Superabsorberpartikel beträgt vorzugsweise höchstens 1000 µm, besonders bevorzugt höchstens 900 µm, ganz besonders bevorzugt höchstens 850 µm, und vorzugsweise mindestens 80 µm, besonders bevorzugt mindestens 90 µm, ganz besonders bevorzugt mindestens 100 µm. Typische Siebschnitte sind beispielsweise 106 bis 850 µm oder 150 bis 850 µm.

Ferner wurden Artikel zur Absorption von Flüssigkeit gefunden, die den erfindungsgemäßen Superabsorber enthalten. Insbesondere wurden Hygieneartikel gefunden, dies sind solche Artikel zur Absorption von Flüssigkeit, die zur Anwendung bei leichter oder schwerer Inkontinenz vorgesehen sind, wie etwa Einlagen für schwere oder leichte Inkontinenz, Inkontinenzhosen, daneben Windeln, sogenannte "training pants" für Babys und Kleinkinder oder auch Damenhygieneartikel wie Einlagen, Damenbinden oder Tampons, Schuheinlagen und anderen Hygieneartikeln zur Absorption von Körperflüssigkeiten. Derartige Hygieneartikel sind bekannt.

Der erfindungsgemäße Superabsorber kann außerdem in anderen Gebieten der Technik eingesetzt werden, bei denen Flüssigkeiten, insbesondere Wasser oder wässrige Lösungen absorbiert werden. Diese Gebiete sind beispielsweise Lagerung, Verpackung, Transport (als Bestandteile von Verpackungsmaterial für wasser- oder feuchtigkeitsempfindliche Artikel, etwa zum Blumentransport, auch als Schutz gegen mechanische Einwirkungen); Tierhygiene (in Katzenstreu); Lebensmittelverpackung (Transport von Fisch, Frischfleisch; Absorption von Wasser, Blut in Frischfisch- oder - fleischverpackungen); Medizin (Wundpflaster, wasserabsorbierendes Material für Brandverbände oder für andere nässende Wunden), Kosmetik (Trägermaterial für Pharmachemikalien und Medikamente, Rheumapflaster, Ultraschallgel, Kühlgel, Kosmetikverdicker, Sonnenschutz); Verdicker für Öl/Wasser bzw. Wasser/Öl-Emulsionen; Textilien (Feuchtigkeitsregulation in Textilien, Schuheinlagen, zur Verdampfungskühlung, etwa in Schutzkleidung, Handschuhen, Stirnbändern); chemisch-technische Anwendungen (als Katalysator für org. Reaktionen, zur Immobilisierung großer funktioneller Moleküle wie Enzymen, als Adhäsionsmittel bei Agglomerationen, Wärmespeicher, Filtrationshilfsmittel, hydrophile Komponente in Polymerlaminaten, Dispergiermittel, Verflüssiger); als Hilfsmittel beim Pulverspritzguss, im Bau- und Konstruktionswesen (Installation, in lehmbasierenden Putzen, als vibrationshemmendes Medium, Hilfsmittel bei Tunnelgrabungen in wasserreichem Untergrund, Kabelummantelung); Wasserbehandlung, Abfallbehandlung, Wasserabtrennung (Enteisungsmittel, wiederverwendbare Sandsäcke); Reinigung; Agrarindustrie (Bewässerung, Rückhaltung von Schmelzwasser und Tauniederschläge, Kompostierungszusatz, Schutz der Wälder vor Pilz/Insektenbefall, verzögerte Freisetzung von Wirkstoffen an Pflanzen); zur Brandbekämpfung oder zum Brandschutz; Coextrusionsmittel in thermoplastischen Polymeren (z. B. zur Hydrophilierung von Mehrschichtfolien); Herstellung von Folien und thermoplastischen Formkörpern, die Wasser absorbieren können (z.B. Regen- und Tauwasser speichernde Folien für die Landwirtschaft; Superabsorber enthaltende Folien zum Frischhalten von Obst und Gemüse, die in feuchte Folien verpackt werden; Superabsorber-Polystyrol Coextrudate, beispielsweise für Lebensmittelverpackungen wie Fleisch, Fisch, Geflügel, Obst und Gemüse); oder als Trägersubstanz in Wirkstoffformulierungen (Pharma, Pflanzenschutz).

Die erfindungsgemäßen Artikel zur Absorption von Flüssigkeit unterscheiden sich von bekannten dadurch, dass sie den erfindungsgemäßen Superabsorber enthalten.

Es wurde außerdem ein Verfahren zur Herstellung von Artikeln zur Absorption von Flüssigkeit, insbesondere Hygieneartikeln gefunden, das dadurch gekennzeichnet ist, dass man bei der Herstellung des betreffenden Artikels mindestens einen erfindungsgemäßen Superabsorber einsetzt. Im übrigen sind Verfahren zur Herstellung solcher Artikel unter Einsatz von Superabsorber bekannt.

Das erfindungsgemäße Verfahren wird durch die nachfolgenden Beispiele näher erläutert.

### Beispiele

### Testmethoden

### Zentrifugenretentionskapazität (CRC, Centrifuge Retention Capacity)

Die CRC wird gemäß der von der EDANA (European Disposables and Nonwovens Association, Avenue Eugène Plasky 157, 1030 Brüssel, Belgien) empfohlenen und von dort erhältlichen Testmethode Nr. 441.2-02 "Centrifuge Retention Capacity" bestimmt.

### Extrahierbare Anteile

Die Bestimmung des nach 16 Stunden extrahierbaren Anteils (LA16) erfolgte wie in EP-A-0 811 636, Seite 13, Zeilen 1 bis 19 beschrieben.

### Beispiel 1: Herstellung eines Polyetherols

In einem 20 l Stahlreaktor mit Mantelkühlung, Ethylenoxiddosierung und Innenthermometer wurden 264 g 3-Allyloxy-1,2-propandiol und 4,05 g Kaliumhydroxid vorgelegt. Der Reaktor wurde mit Stickstoff gespült, auf 100 °C (Innentemperatur) aufgeheizt und bei 20 mbar entwässert. Anschließend wurden bei 135°C insgesamt 1760 g Ethylenoxid innerhalb von 605 Minuten so dosiert, dass der Druck bei 9 bar gehalten wird. Die Reaktionsmischung wurde bis zur Druckkonstanz gerührt, anschließend bis 80°C abgekühlt und mit Stickstoff gestrippt. Es wurden 1620,5 g Produkt erhalten.

### Beispiel 2: Herstellung eines Polyetherols

In einem 20 l Stahlreaktor mit Mantelkühlung, Ethylenoxiddosierung und Innenthermometer wurden 244,2 g 3-Allyloxy-1,2-propandiol und 3,7 g Kaliumhydroxid vorgelegt. Der Reaktor wurde mit Stickstoff gespült und auf 100 °C (Innentemperatur) aufgeheizt. Anschließend wurden insgesamt 1603,4 g Ethylenoxid innerhalb von 495 Minuten so dosiert, dass der Druck zwischen 5 und 8 bar gehalten wurde. Die Reaktionsmischung wurde weiter 6 Stunden bei 8 bar und 100 °C gehalten und anschließend bis 80°C abgekühlt und mit Stickstoff gestrippt. Es wurden 1660,8 g Produkt erhalten.

Die in den weiteren Beispielen jeweils hergestellten Superabsorber wurden nach der folgenden allgemeinen Vorschrift hergestellt:

3100,23 g 37,3%ige wässrige Natriumacrylatlösung, 1328,61 g Acrylsäure und die unten jeweils angegebene Einsatzmenge an vollentsalztem Wasser werden gemischt und mit Stickstoff begast. Diese Mischung wird in einen mit Stickstoff inertisierten Kneter (Hersteller: Coperion Werner & Pfleiderer GmbH & Co. KG, Stuttgart, Deutschland; Typ LUK 8,0 K2 mit zwei Sigma - Wellen) eingefüllt. Nacheinander werden PEGDA 400 (Diacrylsäureester eines Polyethylenglykols mit mittlerem Molgewicht von 400) in der unten jeweils angegebenen Einsatzmenge, 3,32 g Harnstoff, 22,14 g 0,5 Gew.-%ige wässrige Ascorbinsäurelösung, 13,73 g 15 Gew.%-ige wässrige Natriumpersulfatlösung und 2,21 g 3 Gew.-% ige wässrige Wasserstoffperoxidlösung sowie die unten jeweils angegebenen Einsatzmenge eines ungesättigten Polyetherols zugegeben. Der Kneterinhalt wird bei Maximaldrehzahl (entsprechend ca. 98 Upm der schnelleren Welle, ca. 49 Upm der langsameren Welle, Verhältnis ca. 2:1) gerührt. Sofort nach der Zugabe von Wasserstoffperoxid wird der Heizmantel des Kneters auf 74 °C beheizt. Nach Erreichen der Maximaltemperatur wird die Beheizung beendet und der Kneterinhalt weitere 15 min. nachreagieren gelassen. Das erzeugte Gel wird auf 65 °C abgekühlt und entnommen.

Das Gel wird bei 175°C über 75 Minuten in einem Umlufttrockenschrank mit einer Beladung von 700 g Gel pro Trockenblech getrocknet. Nach dreimaligen Mahlen in einem Walzenstuhl (Hersteller: Bauermeister Zerkleinerungstechnik GmbH, Norderstedt, Deutschland; Typ LRC 125/70, mit Spaltbreiten 1000 µm, 600 µm, 400 µm) wird das Polymer auf einen Siebschnitt zwischen 850 und 100 µm abgesiebt.

### Beispiel 3 (Vergleichsbeispiel)

**Einsatzmengen:**

| | |
|---|---|
| 2521,02 g | Wasser |
| 8,72 g | PEGDA 400 |

Es wurde kein ungesättigtes Polyetherol zugegeben.

Das Gel enthielt einige 1 bis 2 cm große Knollen (Gelklumpen). Der getrocknete und gesiebte Superabsorber weist eine CRC von 25,6 g/g sowie einen LA16-Wert von 8,5 Gew.-% auf.

### Beispiel 4

**Einsatzmengen:**

| | |
|---|---|
| 2519,38 g | Wasser |
| 6,86 g | PEGDA 400 |
| 1,0 g | ungesättigtes Polyetherol von Beispiel 1 |

Das Gel enthielt praktisch keine Knollen (Gelklumpen). Der getrocknete und gesiebte Superabsorber weist eine CRC von 25,3 g/g sowie einen LA16-Wert von 8,9 Gew.-% auf.

### Beispiel 5

**Einsatzmengen:**

| | |
|---|---|
| 2520,24 g | Wasser |
| 5,00 g | PEGDA 400 |
| 1,99 | g ungesättigtes Polyetherol von Beispiel 1 |

Das Gel enthielt praktisch keine Knollen (Gelklumpen). Der getrocknete und gesiebte Superabsorber weist eine CRC von 27,0 g/g sowie einen LA16-Wert von 10,9 Gew.-% auf.

### Beispiel 6

**Einsatzmengen:**

| | |
|---|---|
| 2528,61 g | Wasser |
| 6,86 g | PEGDA 400 |
| 1,11 g | ungesättigtes Polyetherol von Beispiel 2 |

Das Gel enthielt praktisch keine Knollen (Gelklumpen). Der getrocknete und gesiebte Superabsorber weist eine CRC von 25,4 g/g sowie einen LA16-Wert von 8,3 Gew.-% auf.

### Beispiel 7

**Einsatzmengen:**

| | |
|---|---|
| 2519,82 g | Wasser |
| 6,86 g | PEGDA 400 |
| 0,55 g | ungesättigtes Polyetherol von Beispiel 2 |

Das Gel enthielt praktisch keine Knollen (Gelklumpen). Der getrocknete und gesiebte Superabsorber weist eine CRC von 26,9 g/g auf.

### Beispiel 8

**Einsatzmengen:**

| | |
|---|---|
| 2519,77 g | Wasser |
| 6,86 g | PEGDA 400 |
| 0,60 g | ethyoxilierter Allyllalkohol Pluriol^{®} A10R, BASF Aktiengesellschaft, Ludwigshafen, Deutschland |

Das Gel enthielt praktisch keine Knollen (Gelklumpen). Der getrocknete und gesiebte Superabsorber weist eine CRC von 25,3 g/g auf.

Die Beispiele zeigen, dass durch den erfindungsgemäßen Zusatz eines ungesättigten Polyetherols die Knollenbildung vermeiden werden kann, ohne sonstige wesentliche Eigenschaften des Superabsorbers merklich zu beeinflussen.

## Patentansprüche

1. Verfahren zu Herstellung von Superabsorbern, **dadurch gekennzeichnet, dass** man die Polymerisation in Gegenwart mindestens eines ungesättigten Polyetherols durchführt, das aus der von den Polyetherolen mit den folgenden Strukturformeln (1), (2), (3), und (4) gebildeten Gruppe ausgewählt ist: 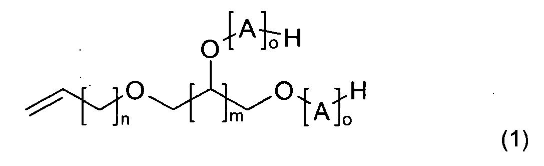 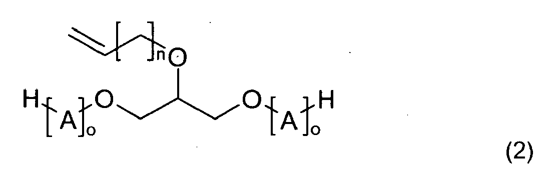 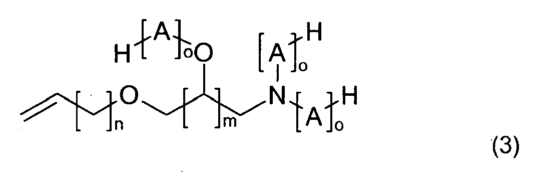 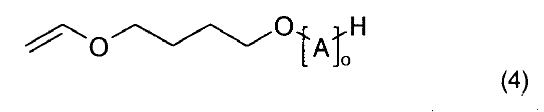 wobei n für 0 oder 1 steht;
m für 1, 2, 3, 4, 5 oder 6;
o für eine natürliche Zahl von 1 bis 200 und
A für die Reste -(H₂C-CHR¹-O)- oder -(R¹HC-CH₂-O)-, wobei R¹ unabhängig voneinander für Wasserstoff oder einen organischen Rest steht.

2. Verfahren nach Anspruch 1, **dadurch gekennzeichnet, dass** man ein Polyetherol verwendet, bei dem m gleich 1 ist.

3. Verfahren nach Anspruch 1 oder 2, **dadurch gekennzeichnet, dass** man ein Polyetherol verwendet, bei dem o für eine natürliche Zahl von 1 bis 50 steht.

4. Verfahren nach Anspruch 3, **dadurch gekennzeichnet, dass** man ein Polyetherol verwendet, bei dem o für eine natürliche Zahl von 10 bis 30 steht.

5. Verfahren nach den Ansprüchen 1 bis 4, **dadurch gekennzeichnet, dass** man ein Polyetherol verwendet, bei dem R¹ für Wasserstoff, einen Methyl- oder einen Ethylrest steht.

6. Verfahren nach Anspruch 5, **dadurch gekennzeichnet, dass** man ein Polyetherol verwendet, bei dem R1 für -(H₂C-CH₂-O)- steht.

7. Verfahren nach den Ansprüchen 1 bis 6, **dadurch gekennzeichnet, dass** man die Polymerisation unter Eintrag mechanischer Energie durchführt.

8. Verfahren nach Anspruch 7, **dadurch gekennzeichnet, dass** man die Polymerisation in einem Kneter durchführt.

9. Superabsorber, erhältlich mit den in den Ansprüchen 1 bis 9 beschriebenen Verfahren.

10. Artikel zur Absorption von Flüssigkeiten, enthaltend den in Anspruch 9 beschriebenen Superabsorber.

11. Verfahren zur Herstellung von Artikeln zur Absorption von Flüssigkeit, **dadurch gekennzeichnet, dass** bei der Herstellung der in Anspruch 9 definierte Superabsorber eingesetzt wird.

## Claims

1. A process for producing a superabsorbent, which comprises polymerizing in the presence of at least one unsaturated polyetherol selected from the group consisting of polyetherols having the following structural formulae (1), (2), (3) and (4): 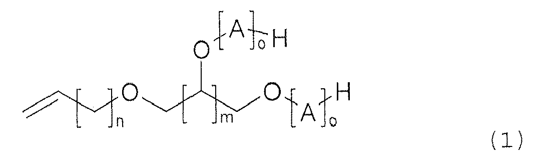 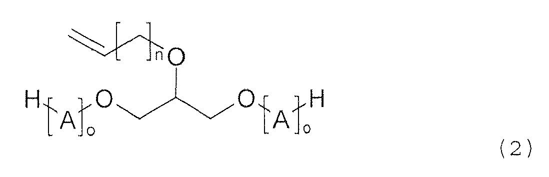 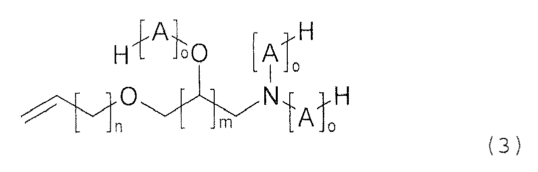 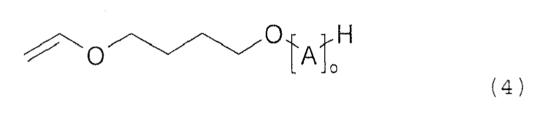 where n is 0 or 1,
m is 1, 2, 3, 4, 5 or 6,
o is a natural number from 1 to 200, and
A is -(H₂C-CHR¹-O)- or -(R¹HC-CH₂-O)-, where R¹ in each occurrence is independently hydrogen or an organic radical.

2. The process according to claim 1 wherein the polyetherol used has m equal 1.

3. The process according to claim 1 or 2 wherein the polyetherol used has o being a natural number from 1 to 50.

4. The process according to claim 3 wherein the polyetherol used has o being a natural number from 10 to 30.

5. The process according to the claims 1 to 4 wherein the polyetherol used has R¹ being hydrogen, methyl or ethyl.

6. The process according to claim 5 wherein the polyetherol used has R1 being -(H₂C-CH₂-O)-.

7. The process according to the claims 1 to 6 wherein the polymerizing is effected with input of mechanical energy.

8. The process according to claim 7 wherein the polymerizing is effected in a kneader.

9. A superabsorbent obtainable using the processes described in the claims 1 to 9.

10. An article for absorbing fluids, comprising the superabsorbent described in claim 9.

11. A process for producing an article for absorbing fluid, which comprises producing the article by utilizing the superabsorbent defined in claim 9.

## Revendications

1. Procédé pour la production de superabsorbants, **caractérisé en ce qu'**on effectue la polymérisation en présence d'au moins un polyétherol insaturé, qui est choisi dans le groupe constitué par les polyétherols ayant les formules développées (1), (2), (3) et (4) suivantes : 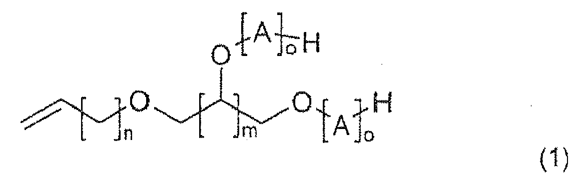 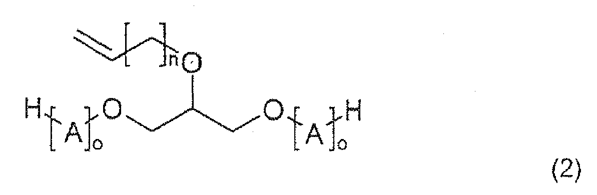 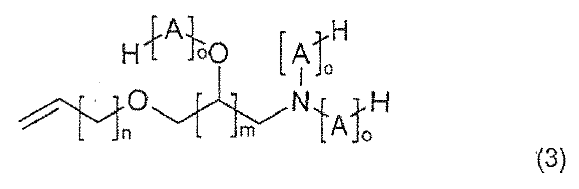 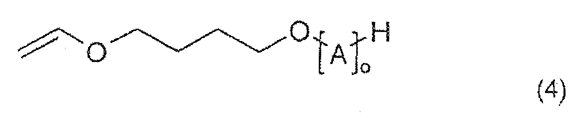 où n représente 0 ou 1 ;
m représente 1, 2, 3, 4, 5 ou 6 ;
o représente un nombre naturel allant de 1 à 200 et
A représente les radicaux -(H₂C-CHR¹-O)- ou -R¹HC-CH₂-O)-, R¹ représentant, indépendamment l'un de l'autre, un atome d'hydrogène ou un radical organique.

2. Procédé selon la revendication 1, **caractérisé en ce qu'**on utilise un polyétherol dans lequel m est égal à 1.

3. Procédé selon la revendication 1 ou 2, **caractérisé en ce qu'**on utilise un polyétherol dans lequel o représente un nombre naturel allant de 1 à 50.

4. Procédé selon la revendication 3, **caractérisé en ce qu'**on utilise un polyétherol dans lequel o représente un nombre naturel allant de 10 à 30.

5. Procédé selon les revendications 1 à 4, **caractérisé en ce qu'**on utilise un polyétherol dans lequel R¹ représente un atome d'hydrogène, un radical méthyle ou un radical éthyle.

6. Procédé selon la revendication 5, **caractérisé en ce qu'**on utilise un polyétherol dans lequel R1 représente -(H₂C-CH₂-O)-.

7. Procédé selon les revendications 1 à 6, **caractérisé en ce qu'**on effectue la polymérisation avec apport d'énergie mécanique.

8. Procédé selon la revendication 7, **caractérisé en ce qu'**on effectue la polymérisation dans un malaxeur.

9. Superabsorbant, pouvant être obtenu par les procédés décrits dans les revendications 1 à 9.

10. Article destiné à l'absorption de liquides, contenant le superabsorbant décrit dans la revendication 9.

11. Procédé pour la fabrication d'articles destinés à l'absorption de liquide, **caractérisé en ce que** dans la fabrication on utilise le superabsorbant défini dans la revendication 9.
